# EUROPÄISCHE PATENTANMELDUNG

(11) **EP 1 950 478 A2**
(43) Veröffentlichungstag der Anmeldung: **30.07.2008**
(21) Anmeldenummer: 08100400.4
(22) Anmeldetag: 14.01.2008
(51) Int. Cl.: F16L 3/10

(54) **Rohrschelle**

(30) Priorität: 23.01.2007 DE 102007000031
(71) Anmelder: HILTI Aktiengesellschaft, 9494 Schaan (LI)
(72) Erfinder: Unverzagt, Stefan, 6800 Feldkirch (AT); Schierscher, Gabriel, 9494 Schaan (LI)
(74) Vertreter: Wildi, Roland

(57) **Zusammenfassung**

Eine Rohrschelle weist zumindest einen eine Krümmung aufweisenden Schellenbügel (14) auf, an dem ein krümmungsseitig nach aussen vorspringender Anschlusskopf (21) mit einer Tangentialfläche (25) ausgebildet ist. Der Anschlusskopf (21) weist einen von der Tangentialfläche (25) abragenden Durchzug (22) mit einem Gewindeabschnitt (23) sowie zwei einander gegenüberliegende Seitenflächen (26) zur Ausbildung von Schlüsselflächen auf.

## Beschreibung

Die Erfindung betrifft eine Rohrschelle mit zumindest einem eine Krümmung aufweisenden Schellenbügel, an dem ein krümmungsseitig nach aussen vorspringender Anschlusskopf mit einer Tangentialfläche ausgebildet ist.

Eine derartige Rohrschelle dient der Fixierung und Halterung von Leitungen, wie z. B. von Rohren, Kabeln oder dergleichen, an einem Untergrund oder an einem Träger mittels eines Befestigungselementes, wie beispielsweise einer Gewindestange.

Aus der DE 29 11 897 A1 ist beispielsweise eine Rohrschelle mit einem an einem Schellenbügel ausgebildeten, krümmungsseitig nach aussen vorspringenden Anschlusskopf bekannt, der eine an der Tangentialfläche festgelegte Mutter mit einem Innengewinde aufweist. Über das Innengewinde der Mutter kann die Rohrschelle mit einem ein Aussengewinde aufweisenden Befestigungselement fixiert werden, wobei die Aussenkontur der Mutter Schlüsselflächen für ein Werkzeug zur Übertragung eines Drehmomentes aufweist.

Nachteilig an der bekannten Lösung ist, dass zur Ausbildung des Anschlusskopfes der Rohrschelle am Schellenbügel ein zusätzlich festzulegendes Element erforderlich ist und somit der Aufwand zur Fertigung einer derartigen Rohrschelle gross ist.

Aufgabe der Erfindung ist es, eine Rohrschelle mit einem Anschlusskopf zu schaffen, der einfach zu fertigen ist und trotzdem die Übertragung eines Drehmomentes mittels eines Werkzeugs ermöglicht.

Die Aufgabe ist durch die Merkmale des unabhängigen Anspruchs gelöst. Vorteilhafte Weiterbildungen sind in den Unteransprüchen dargelegt.

Gemäss der Erfindung weist der Anschlusskopf einen von der Tangentialfläche abragenden Durchzug mit einem Gewindeabschnitt sowie zwei einander gegenüberliegende Seitenflächen zur Ausbildung von Schlüsselflächen auf.

Die Ausbildung des Durchzugs kann wie die Ausbildung der Tangentialfläche des Anschlusskopfes einfach in die Fertigung des Schellenbügels integriert werden, so dass der Aufwand gegenüber einem Anschlusskopf mit einem zusätzlichen und in einem separaten Verfahrensschritt festzulegenden Bauteil massgeblich reduziert ist. Vorteilhaft wird ein umfänglich geschlossener Durchzug an der Tangentialfläche des vorspringenden Anschlusskopfes als Anschlussmittel für ein Befestigungselement vorgesehen, der eine Übertragung von hohen Lasten ermöglicht.

Mittels der als Schlüsselflächen ausgebildeten Seitenflächen des die Tangentialfläche aufweisenden Vorsprungs ist die Rohrschelle trotz der einfachen Fertigung wie eine bisher bekannte Rohrschelle montierbar. Vorteilhaft sind die Seitenflächen des Vorsprungs parallel zueinander ausgerichtet. Die wirtschaftliche Herstellung der Rohrschelle stellt einen wesentlichen Vorteil bei einem Massenprodukt dar, wie es eine derartige Rohrschelle darstellt.

Vorzugsweise weist der Durchzug zwei Gewindeabschnitte mit unterschiedlichen Durchmessern auf, die vorteilhaft koaxial zueinander angeordnet sind und einen Doppelgewindeanschluss an der Rohrschelle ausbilden. Je nach Anforderungen an die Befestigung oder Verfügbarkeit des Befestigungsmittels wird das Befestigungsmittel mit dem entsprechenden Gewindedurchmesser gewählt und mit dem grösseren beziehungsweise mit dem kleineren Gewinde verbunden.

Bevorzugt ragt der Durchzug ausgehend von der Tangentialfläche krümmungsseitig nach innen ab, so dass kein Abschnitt des Durchzugs über die ebene Tangentialfläche nach aussen vorsteht und eine Montage der Rohrschelle nahe beim Untergrund oder am Träger behindert. Die maximale Erstreckung des Durchzugs ausgehend von der Tangentialfläche ist vorteilhaft derart gewählt, dass das freie Ende des Durchzugs nicht in den von dem zumindest einen Schellenbügel aufgespannten Aufnahmeraum für die zu fixierende Leitung hineinragt und eine Montage der Leitung behindert.

Vorzugsweise ist am freien Ende des Durchzugs ein Eindrehbegrenzungsmittel vorgesehen, das die maximale Eindrehtiefe des Befestigungselementes beschränkt und dadurch ein Eindringen des Befestigungselementes in die Projektion des Aufnahmeraums für die zu fixierende Leitung verhindert. Das Eindrehbegrenzungsmittel ist beispielsweise ein an dem Durchzug ausgeformter Abschnitt, der die von dem Durchzug geschaffene Öffnung verengt.

In einer weiteren erfindungsgemässen Variante ragt der Durchzug ausgehend von der Tangentialfläche krümmungsseitig nach aussen ab und ist somit von dem Aufnahmeraum für die Leitung abgewandt. Die maximale Erstreckung des Durchzugs ausgehend von der Tangentialfläche und somit die maximale Länge des Gewindes am oder im Durchzug ist nicht durch den erforderlichen Aufnahmeraum für die Leitungen beschränkt. Zudem kann an einem derartig ausgebildeten Durchzug ein Innengewinde und auch ein Aussengewinde zur Verbindung mit entsprechend ausgebildeten Befestigungselementen vorgesehen werden.

Vorzugsweise ist am Endbereich des Durchzugs im Bereich der Tangentialfläche ein Eindrehbegrenzungsmittel vorgesehen, das die maximale Eindrehtiefe des Befestigungselementes beschränkt und somit ein Eindringen des Befestigungselementes in die Projektion des Aufnahmeraums der Rohrschelle verhindert. Das Eindrehbegrenzungsmittel ist beispielsweise ein die von dem Durchzug gebildete Öffnung verengender Materialvorsprung.

Die Erfindung wird nachstehend anhand von Ausführungsbeispielen näher erläutert. Es zeigen:
- Fig. 1: Eine erfindungsgemässe Rohrschelle in Seitenansicht;
- Fig. 2: einen Anschlusskopf im Grundriss aus der Ebene II-II in Fig. 1 gesehen;
- Fig. 3: einen Schnitt durch den Anschlusskopf entlang der Linie lll-lll in Fig. 2;
- Fig. 4: einen Schnitt analog Fig. 3 durch ein zweites Ausführungsbeispiel eines Anschlusskopfes;
- Fig. 5: ein drittes Ausführungsbeispiel eines Anschlusskopfes im Grundriss.

Grundsätzlich sind in den Figuren gleiche Teile mit den gleichen Bezugszeichen versehen.

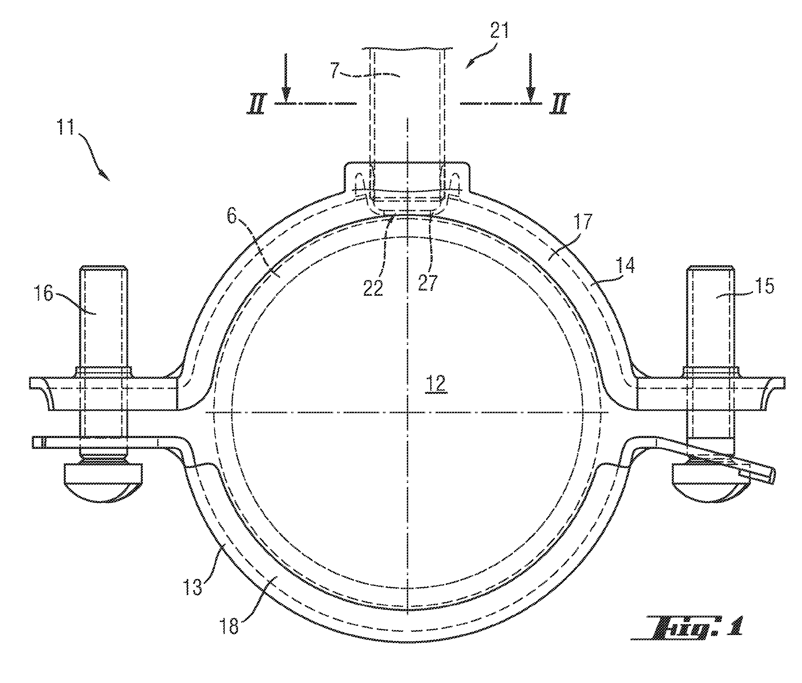

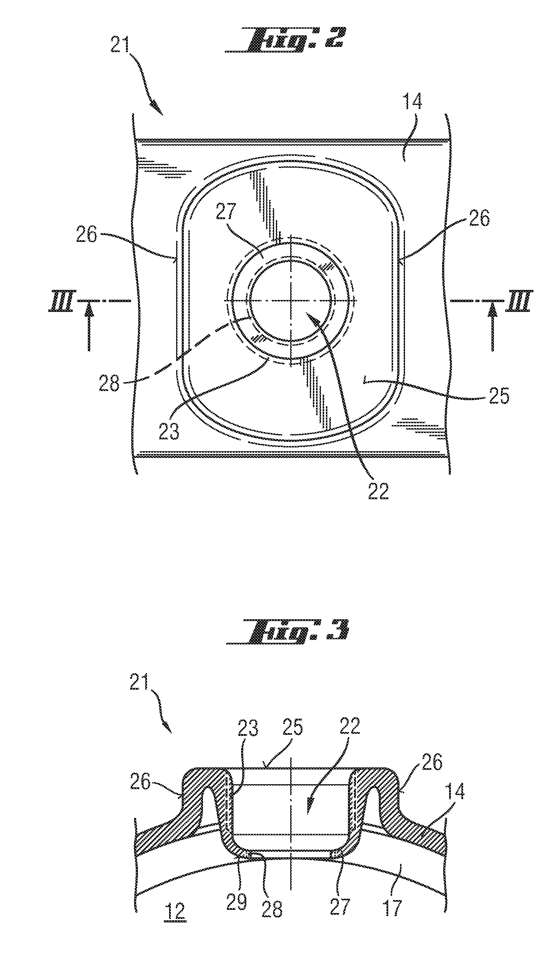

Die in den Figuren 1 bis 3 dargestellte Rohrschelle 11 zur Fixierung einer Leitung 6 weist zwei jeweils eine Krümmung aufweisende Schellenbügel 13 und 14 auf, die über Verbindungsmittel 15 und 16 lösbar miteinander verbunden sind und die einen Aufnahmeraum 12 für die Leitung 6 aufspannen. An dem Schellenbügel 14 ist ein krümmungsseitig nach aussen vorspringender, durch Tiefziehen erzeugter Anschlusskopf 21 zur Festlegung der Rohrschelle 11 mittels eines Befestigungselementes 7 an einem Untergrund vorgesehen. Die Schellenbügel 13 und 14 weisen entlang ihrer Längserstreckung jeweils beidseitig seitlich angeordnete, dem Aufnahmeraum 12 zugewandte Abbiegungen 17 und 18 auf.

Der vorspringende Anschlusskopf 21 weist eine im Wesentlichen ebene Tangentialfläche 25 sowie einen von der Tangentialfläche 25 abragenden Durchzug 22 mit einem ersten Gewindeabschnitt 23 und zwei einander gegenüberliegende Seitenflächen 26 zur Ausbildung von Schlüsselflächen auf. Die Seitenflächen 26 des Anschlusskopfes 21 sind parallel zueinander ausgerichtet. Der Durchzug 22 bildet das Anschlussmittel für das Befestigungselement 7 zur Festlegung der Rohrschelle 11.

Der Durchzug 22 ragt ausgehend von der Tangentialfläche 25 krümmungsseitig nach innen beziehungsweise in diesem Ausführungsbeispiel radial nach innen ab und ist somit dem von den Schellenbügeln 13 und 14 aufgespannten Aufnahmeraum 12 zugewandt. Das freie Ende 29 des Durchzugs 22 ragt nicht in die von den Abbiegungen 17 der Schellenbügel 13 und 14 begrenzten Projektion des Aufnahmeraums 12 hinein. Am freien Ende 29 des Durchzugs 22 ist ein die von dem Durchzug 22 geschaffene Öffnung verengender Abschnitt 27 als Eindrehbegrenzungsmittel vorgesehen. An dem freien Rand des Abschnitts 27 kann ein zweiter Gewindeabschnitt 28 vorgesehen sein, der gegenüber dem ersten Gewindeabschnitt 23 einen kleineren Durchmesser aufweist.

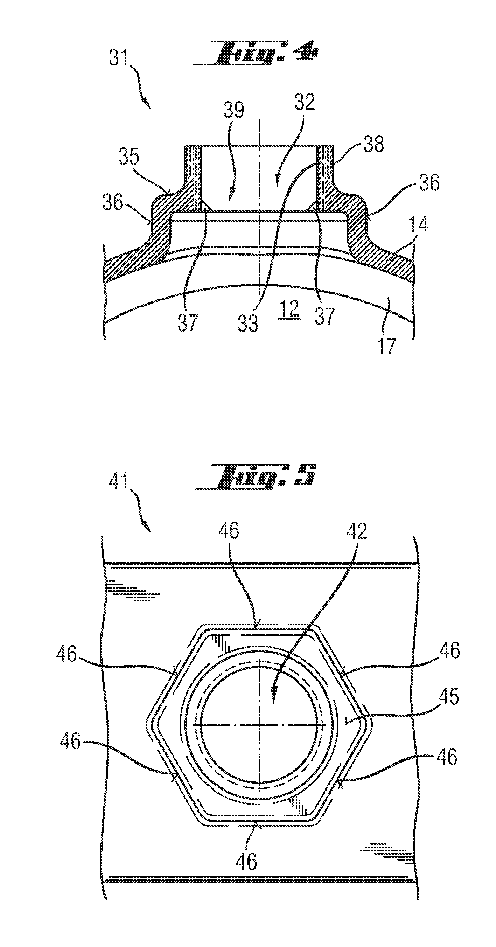

Bei dem in der Figur 4 dargestellten Anschlusskopf 31 ist ein Durchzug 32 vorgesehen, der ausgehend von der Tangentialfläche 35 krümmungsseitig nach aussen abragt beziehungsweise dem von dem Schellenbügel 14 aufgespannten Aufnahmeraum 12 abgewandt ist. Auch dieser Anschlusskopf 31 weist zwei einander gegenüberliegende Seitenflächen 36 zur Ausbildung von Schlüsselflächen auf, die im Wesentlichen parallel zueinander ausgerichtet sind.

Am Endbereich 39 des Durchzugs 32 sind im Bereich der Tangentialfläche 35 mehrere Nasen 37 als Eindrehbegrenzungsmittel vorgesehen, welche die von dem Durchzug 32 geschaffene Öffnung in diesem Endbereich 39 des Durchzugs 32 verengen. Der Durchzug 32 weist als einen ersten Gewindeabschnitt 33 ein Innengewinde und als einen zweiten Gewindeabschnitt 38 an seiner radialen Aussenkontur ein Aussengewinde auf.

Der in der Figur 5 dargestellte Anschlusskopf 41 weist sechs Seitenflächen 46 als Schlüsselflächen eines Werkzeugs (hier nicht dargestellt) sowie einen von der Tangentialfläche 45 abragenden Durchzug 42 auf.

## Patentansprüche

1. Rohrschelle mit zumindest einem eine Krümmung aufweisenden Schellenbügel (13, 14), an dem ein krümmungsseitig nach aussen vorspringender Anschlusskopf (21; 31; 41) mit einer Tangentialfläche (25; 35; 45) ausgebildet ist, **dadurch gekennzeichnet, dass** der Anschlusskopf (21; 31; 41) einen von der Tangentialfläche (25; 35; 45) abragenden Durchzug (22; 32; 42) mit einem Gewindeabschnitt (23, 28; 33; 38) sowie zwei einander gegenüberliegende Seitenflächen (26; 36: 46) zur Ausbildung von Schlüsselflächen aufweist.

2. Rohrschelle nach Anspruch 1, **dadurch gekennzeichnet, dass** der Durchzug (22; 32) zwei Gewindeabschnitte (23, 28; 33; 38) mit unterschiedlichen Durchmessern aufweist.

3. Rohrschelle nach Anspruch 1 oder 2, **dadurch gekennzeichnet, dass** der Durchzug (22) ausgehend von der Tangentialfläche (25) krümmungsseitig nach innen abragt.

4. Rohrschelle nach Anspruch 3, **dadurch gekennzeichnet, dass** am freien Ende (29) des Durchzugs (22) ein Eindrehbegrenzungsmittel vorgesehen ist.

5. Rohrschelle nach Anspruch 1 oder 2, **dadurch gekennzeichnet, dass** der Durchzug (32) ausgehend von der Tangentialfläche (35) krümmungsseitig nach aussen abragt.

6. Rohrschelle nach Anspruch 5, **dadurch gekennzeichnet, dass** am Endbereich (39) des Durchzugs (32) im Bereich der Tangentialfläche (35) ein Eindrehbegrenzungsmittel vorgesehen ist.
